(19) Europäisches Patentamt
European Patent Office
Office européen des brevets

(11) Veröffentlichungsnummer: **0 004 310**
**B1**

(12) # EUROPÄISCHE PATENTSCHRIFT

(21) Anmeldenummer: **79100660.4**

(22) Anmeldetag: **06.03.79**

(51) Int. Cl.³: **C 07 F 7/18**

(54) **Verfahren zur Herstellung von Silanen**

(30) Priorität: **17.03.78 DE 2811854**

(43) Veröffentlichungstag der Anmeldung:
**03.10.79 Patentblatt 79/20**

(45) Bekanntmachung des Hinweises auf die Patenterteilung:
**29.10.80 Patentblatt 80/22**

(84) Benannte Vertragsstaaten:
**DE FR GB**

(56) Entgegenhaltungen:
**DE - B - 1 162 365**
**GB - A - 653 237**

(73) Patentinhaber: **BAYER AG**
***Zentralbereich Patente, Marken und Lizenzen***
**D - 5090 Leverkusen 1, Bayerwerk (DE)**

(72) Erfinder: **Schlak, Ottfried, Dr.**
**Carl-Rumpff-Strasse 5**
**D - 5090 Leverkusen 1 (DE)**
**Moretto, Hans-Heinrich, Dr.**
**Formesstrasse 13**
**D - 5000 Köln 80 (DE)**

EP 0 004 310 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von Silanen

Die vorliegende Erfindung betrifft ein Verfahren zur Herstellung von Silanen der allgemeinen Formel

$$R_aSiH_b(OR')_{4-(a+b)} \qquad (I)$$

wobei
R für einen gegebenenfalls substituierten Alkyl-, Alkenyl- oder Arylrest mit bis zu 7 C-Atomen,
R' für einen Alkylrest mit 4 C-Atomen und
a und b für 1, 2 oder 3 stehen und die Summe von a+b höchstens 4 beträgt,
durch Umsetzung von Si—H-gruppenhaltigen Organopolysiloxanen mit Verbindungen der allgemeinen Formel

$$R_aSi(OR')_{4-a}$$

wobei R, R' und a die oben genannte Bedeutung besitzen, in Gegenwart von an sich bekannten, die Austauschreaktion begünstigenden redoxstabilen Siloxan-Polymerisationskatalysatoren.

Silane der allgemeinen Formel I werden im allgemeinen durch Umsetzung von Halogensilanen der Formel

$$R_aSiH_bX_{4-(a+b)} \quad (X = Br, Cl)$$

mit Alkoholen erhalten (vgl. z.B. V. Bazant, Organosilicon Compounds (1965), S. 125).

Dabei werden jedoch oft nur unbefriedigende Ausbeuten erreicht. Der Grund hierfür ist hauptsächlich darin zu suchen, daß der entstehende Chlorwasserstoff sowohl die Silicium-Alkoxygruppe zu Alkohol und Chlorsilan als auch (vornehmlich in Gegenwart von Alkohol) die Hydrosilanbindung unter Abspaltung von Wasserstoff und Ausbildung einer

$$\overset{|}{\underset{|}{-Si-}}OR$$

oder

$$\overset{|}{\underset{|}{-Si-}}Cl\text{-Bindung}$$

zerstört. Weiterhin bildet der Chlorwasserstoff mit den eingesetzten Alkanolen Chloralkane und intermediär Wasser, das die Chlorsilane und Alkoxysilane seinerseits hydrolysierend angreift.

Diese Nebenreaktionen können weitgehend unterdrückt werden, wenn man den Halogenwasserstoff schnell aus dem Reaktionsgemisch entfernt oder mit Basen abfängt. Jedoch sind dafür komplizierte Apparaturen und Maßnahmen erforderlich.

So wird z.B. die Verwendung eines Säureakzeptors in DT—AS 1.162.365 und in DT—AS 2.304.503 beschrieben; die Anwendung von vermindertem Druck in US—PS 3.008.975; die Verwendung von Pentan in US—PS 3.806.549; die Reaktion in der Dampfphase in DT—OS 2.144.748; die Verwendung eines Doppelmantelrohres in DT—OS 2.033.373 und die Verwendung von Inertgas und tiefen Temperaturen in DT—AS 1.298.972.

Ferner ist es bekannt, die oben beschriebenen Nebenreaktionen zu umgehen, indem man, wie in GB—PS 653 237 beschrieben, Trimethylchlorsilan in Trimethyläthoxysilan überführt und dieses nach folgender Gleichung mit Methylhydrogendichlorsilan umsetzt:

$$2\ Me_3SiO\varepsilon t + MeHSiCl_2 \rightarrow 2\ Me_3SiCl + MeHSi(O\varepsilon t)_2.$$

Das als Nebenprodukt entstehende Trimethylchlorsilan wird dabei laufend aus dem Gleichgewicht abdestilliert. Außerdem wird in der Auslegeschrift JA—AS 084 094 eine gezielte Wasserstoffabspaltung gemäß der Gleichung:

$$RSiH_3 + 2\ R'OH \rightarrow RHSi(OR')_2 + 2\ H_2$$

beschrieben.

Ein weiteres, jedoch ebenfalls aufwendiges Verfahren besteht darin, daß man Orthoameisensäuretriäthylester mit Methylhydrogendichlorsilan umsetzt (vgl. z.B. W. Noll, Chemie und Technologie der Silicone, Weinheim 1968, S. 78).

Alle genannten Verfahren besitzen jedoch Nachteile, die sie für einen technischen Einsatz ungeeignet machen.

Überraschenderweise wurde nun gefunden, daß man erfindungsgemäß auf einfachem Wege und mit guten Ausbeuten zu Silanen der Formel

$$R_aSiH_b\,(OR')_{4-(a+b)}$$

gelangen kann, wenn man die jeweils leicht zugänglichen Alkylhydrogenpolysiloxane in Gegenwart eines Katalysators mit den entsprechenden ebenfalls leicht zugänglichen Alkoxysilanen umsetzt, so daß die vorstehend beschriebenen Schwierigkeiten nicht auftreten. Dabei tauschen eine oder mehrere Alkoxy-Gruppen des monomeren Silans mit jeweils einem direkt an das Siliciumatom gebundenen Wasserstoffatom des Alkylhydrogenpolysiloxans aus. Hierbei entstehen gleichzeitig Polysiloxane in denen der Si—H-Wasserstoff teilweise oder vollständig durch Alkoxygruppen ersetzt ist.

Für das erfindungsgemäße Verfahren eignen sich Alkylhydrogenpolysiloxane der folgenden allgemeinen Formel

$$R_3SiO\left[\begin{matrix}R\\SiO\\R\end{matrix}\right]_x\left[\begin{matrix}R\\SiO\\H\end{matrix}\right]_y SiR_3\,;$$

$$HR_2SiO\left[\begin{matrix}R\\SiO\\R\end{matrix}\right]_x\left[\begin{matrix}R\\SiO\\H\end{matrix}\right]_y SiR_2H\,;$$

wobei

R die vorgenannte Bedeutung besitzt und
x 0 bis 500, und
y 2 bis 500, vorzugsweise 3 bis 70 sein kann.

Bevorzugt sind die technisch zugänglichen Methylsiloxane, jedoch sind andere Siloxane wie z.B. auch Phenyl, Äthyl-, Vinylsiloxane und die jeweiligen Mischungen ebenfalls geeignet.

Weiterhin sind Polymere als Ausgangssubstanz einsetzbar wie z.B.

$$R_3SiO\left[\begin{matrix}R\\SiO-\\|\\O\left[\begin{matrix}R\\SiO\\R\end{matrix}\right]_x\left[\begin{matrix}R\\SiO\\H\end{matrix}\right]_y SiR_3\end{matrix}\right]_z\left[\begin{matrix}R\\SiO\\R\end{matrix}\right]_x\left[\begin{matrix}R\\SiO\\H\end{matrix}\right]_y SiR_3$$

wobei R, x und Y unabhängig voneinander die obige Bedeutung haben und z = 0—10 ist, oder auch cyclische Verbindungen wie

$$\left[\begin{matrix}CH_3\\|\\-SiO\\|\\H\end{matrix}\right]_n;\ n = 3\text{–}8.$$

Die Reaktion verläuft in Gegenwart von an sich bekannten, unter den gegebenen Reaktionsbedingungen redoxstabilen Siloxan-Polymerisationskatalysatoren.

Geeignete Katalysatoren sind z.B. Alkalimetalle wie Natrium, deren Alkoholate und Hydroxide wie Natriummethylat und Kaliumhydroxid, tert.-Amine, starke Säuren, Bleicherden und Metallhalogenide wie z.B. $AlCl_3$ oder andere Verbindungen wie z.B. Al-Acetylacetonat. Weitere geeignete Katalysatoren sind in W. Noll, 1.c. S. 81 sowie 188—197 beschrieben.

Die erfindungsgemäße Herstellung kann in einfacher Weise in einem gebräuchlichen Reaktionsgefäß durchgeführt werden, wobei die Temperatur im Reaktionsgefäß so zu wählen ist, daß das gewünschte Reaktionsprodukt zügig abdestilliert. Zu diesem Zweck kann auch ein Unterdruck oder gegebenenfalls ein Überdruck verwendet werden. In der Regel findet die Herstellung jedoch bei Normaldruck statt. Die Reaktionstemperatur beträgt in der Regel 30°C bis 300°C; insbesondere 100°C bis 250°C. Es erwies sich als vorteilhaft, die Reaktion so zu führen, daß man einen Teil des Alkoxysilans mit dem Katalysator vorlegte, das restliche Reaktionsgemisch zudosierte und das Reaktionsprodukt in dem Maße wie es entstand, abdestillierte; jedoch sind auch andere Arten der Reaktionsführung möglich. Die Menge des Katalysators kann je nach der gewünschten Reaktionsgeschwindigkeit variiert werden; der Bereich von 0,1—10 Gew.% — bezogen auf die Ausgangsverbindungen — erwies sich jedoch als günstig. 0,5—5 Gew.% sind besonders bevorzugt.

Weiterhin kann es vorteilhaft sein, zur Herabsetzung der Viskosität in einem inerten Lösungsmittel zu arbeiten, dessen Siedepunkt höher ist als der des gewünschten Produktes, wie z.B. in Toluol oder Xylol.

Anhand der folgenden Beispiele soll das erfindungsgemäße Verfahren noch näher erläutert werden. Prozentangaben sind soweit nicht anderes vermerkt ist — Gew.-Prozentangaben. Die Abkürzungen Me bzw. εt stehen für $CH_3$ bzw. $C_2H_5$-; M steht für eine $(CH_3)_3SiO$-Gruppe und $D^H$ für eine $H(CH_3)SiO$-Gruppe.

## Beispiel 1

In einem 1 l Dreihalskolben mit Thermometer, magnetischem Rührer, Tropftrichter, Spiegelkolonne (80 cm lang, 8 cm Durchmesser, 6 mm Raschigringfüllung), Destillationskopf und Blasenzähler am Apparateauslaß wurden 10 g $AlCl_3$ (1,0%) und 100 g $CH_3Si(OC_2H_5)_3$ (0,56 Mol) vorgelegt. Die Apparatur wurde gründlich mit trockenem $N_2$ gespült; danach der Sumpf auf 140°C erhitzt und anschließend während 5 Stunden ein Gemisch aus 606 g $CH_3Si(OC_2H_5)_3$ (3,4 Mol) und 307 g Methylhydrogenpolysiloxan der Formel $(CH_3)_3Si—O\ [HCH_3SiO]_{30}\ Si(CH_3)_3$ (ca. 4,7 Mol SiH) zugetropft. Gleichzeitig wurde zwischen 95 und 103°C Siedetemperatur, in dem Maße, wie es entstand, ein Destillat abgenommen, das nach gaschromatographischer Analyse zu 94,4% aus $HCH_3Si(OC_2H_5)_2$ bestand. Es wurden 497 g Destillat erhalten (3,49 Mol $HCH_3Si(OC_2H_5)_2$ bzw. 88% bezogen auf $CH_3Si(OC_2H_3)_3$). Die Sumpftemperatur stieg während dieser Zeit bis auf 210°C. Danach wurde bis zum Erkalten mit $N_2$ gespült. Zurück bleiben 507 g leichtbewegliche Flüssigkeit, die nach der NMR-spektroskopischen Analyse die ungefähre Zusammensetzung

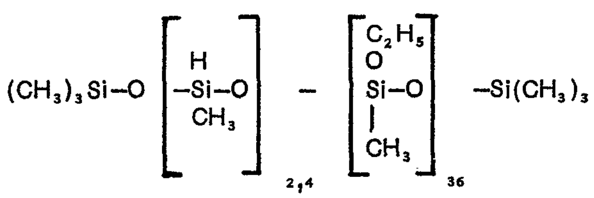

besaß.

## Beispiel 2

In der gleichen Art wie in Beispiel 1 wurden 756 g MeSi $(0\varepsilon t)_3$ (4,24 Mol), 20 g $AlCl_3$ (1,88%) und 307 g eines Methylhydrogenpolysiloxans der Formel M $D^H_{11}$ $Si(CH_3)_3$ (4,1 Mol SiH) zur Reaktion gebracht.

Dabei wurde ein Destillat erhalten, das nach gaschromatographischer Analyse zu 89,3% aus $MeHSi(0\varepsilon t)_2$ bestand. Es wurden 590 g Destillat erhalten. (3,92 Mol MeHSi $(0\varepsilon t)_2$ bzw. 95,7% bezogen auf eingesetztes SiH).

Zurück blieben 475 g leichtbewegliche Flüssigkeit, die nach NMR-spektroskopischer Analyse die ungefähre Zusammensetzung.

$$M\ D^{0\varepsilon t}_{18}\ Si(CH_3)_3$$

besaß.

## Beispiel 3

In der gleichen Art wie in Beispiel 1 wurden 626 g MeSi $(0\varepsilon t)_3$ (2,95 Mol), 10 g Aluminiumacetylacetonat (1,3%) und 232 g eines Methylhydrogenpolysiloxans der Formel M $D^H_{11}$ $Si(CH_3)_3$ (3,1 Mol SiH) zur Reaktion gebracht. Dabei wurde ein Destillat erhalten, das nach gaschromatographischer Analyse zu 66,4% aus MeHSi $(0\varepsilon t)_2$ bestand. Es wurden 346 g Destillat erhalten, (1,71 Mol MeHSi $(0\varepsilon t)_2$ bzw. 55,2% bezogen auf SiH). Zurück blieben 409 g leichtbewegliche Flüssigkeit, die nach NMR-spektroskopischer Analyse die ungefähre Zusammensetzung M $D^{0\varepsilon t}_{23}$ $Si(CH_3)_3$ besaß.

## Beispiel 4

In der gleichen Art wie in Beispiel 1 wurden 353 g Me Si $(0\varepsilon t)_3$ (1,98 Mol), 2,5 g KOH (0,5%) und 154 g eines Methylhydrogenpolysiloxans der Formel M $D^H_{11}$ $Si(CH_3)_3$ (2,06 Mol SiH) zur Reaktion

gebracht. Die Ausbeute an MeHSi $(O\varepsilon t)_2$ betrug — nach gaschromatographischer Analyse — 32,1% bezogen auf SiH.

Beispiel 5

In der gleichen Art wie in Beispiel 1 wurden 180 g MeSi $(O\varepsilon t)_3$ (1,01 Mol), 15,2 g Tributylamine (6,1%) und 70 g eines Methylhydrogenpolysiloxans der Formel M $D^H_{54}$ $Si(CH_3)_3$ (1,1 Mol SiH) zur Reaktion gebracht. Die Ausbeute an MeHSi $(O\varepsilon t)_2$ betrug — nach gaschromatographischer Analyse — 13,2% bezogen auf SiH.

Beispiel 6

In der gleichen Art wie in Beispiel 5 wurden 180 g MeSi $(O\varepsilon t)_3$ (1,01 Mol), 2 g $C_4F_9SO_3H$ (0,8%) und 70 g eines Methylhydrogenpolysiloxans der Formel M $D^H_{54}$ $Si(CH_3)_3$ (1,1 Mol SiH) zur Reaktion gebracht. Die Ausbeute an MeHSi $(O\varepsilon t)_2$ betrug — nach gaschromatographischer Analyse — 68,4% bezogen auf SiH.

Beispiel 7

In der gleichen Art wie in Beispiel 5 wurden 180 g MeSi $(O\varepsilon t)_3$ (1,01 Mol), 25 g (10%) Bleicherde und 70 g eines Methylhydrogenpolysiloxans der Formel M $D^H_{54}$ $Si(CH_3)_3$ (1,1 Mol SiH) zur Reaktion gebracht. Die Ausbeute an MeHSi $(O\varepsilon t)_2$ betrug — nach gaschromatographischer Analyse — 33,9% bezogen auf SiH.

Beispiel 8

In der gleichen Art wie in Beispiel 1 wurden 520 g $Me_2Si$ $(O\varepsilon t)_2$ (3,51 Mol), 37,5 (5,0%) $AlCl_3$ und 230 g eines Methylhydrogenpolysiloxans der Formel M $D^H_{30}$ $Si(CH_3)_3$ (3,51 Mol SiH) zur Reaktion gebracht.

Dabeit wurde bei einer Siedetemperatur von 50 bis 60°C ein Destillat abgenommen, das nach gaschromatographischer Analyse zu 73,8% aus $Me_2HSiO\varepsilon t$ bestand. Es wurden 376 g Destillat erhalten. (2,66 Mol $Me_2HSi$ $O\varepsilon t$ bzw. 75,9% bezogen auf eingesetztes $Me_2Si$ $(O\varepsilon t)_2$).

**Patentansprüche**

1. Verfahren zur Herstellung von Silanen der allgemeinen Formel

$$R_aSiH_b(OR')_{4-(a+b)}$$

wobei R für einen gegebenenfalls substituierten Alkyl-, Alkenyl- oder Arylrest mit bis zu 7 C-Atomen steht; R' für einen Alkylrest mit 1 bis 4 C-Atomen; a und b die Werte 1, 2 und 3 annehmen können und a+b höchstens 4 ist, dadurch gekennzeichnet, daß man Si—H-Polysiloxane mit Verbindungen der allgemeinen Formel

$$R_aSi(OR')_{4-a}$$

wobei R, R' und a die oben angegebene Bedeutung haben, in Gegenwart von an sich bekannten, die Austauschreaktion begünstigenden, redoxstabilen Siloxan-Polymerisationskatalysatoren zur Reaktion bringt.

2. Verfahren nach Anspruch 1, dadurch gekennzeichnet, daß man als Katalysator $AlCl_3$ einsetzt.

**Revendications**

1. Procédé de production de silanes de formule générale:

$$R_aSiH_b(OR')_{4-(a+b)}$$

dans laquelle R est un reste alkyle, alcényle ou aryle éventuellement substitué ayant jusqu'à 7 atomes de carbone; R' est un reste alkyle ayant 1 à 4 atomes de carbone; *a* et *b* peuvent prendre les valeurs 1, 2 et 3 et la somme *a* + *b* est au maximum égale à 4, caractérisé en ce qu'on fait réagir des Si—H-polysiloxanes avec des composés de formule générale:

$$R_aSi(OR')_{4-a}$$

dans laquelle R, R' et *a* ont les définitions données cidessus, en présence de catalyseurs connus de polymérisation de siloxanes stables à l'oxydoréduction, favorisant la réaction d'échange.

2. Procédé suivant la revendication 1, caractérisé en ce qu'on utilise $AlCl_3$ comme catalyseur.

## Claims

1. A process for the preparation of silanes of the general formula

$$R_aSiH_b(OR')_{4-(a+b)}$$

wherein

R represents an optionally substituted alkyl, alkenyl or aryl radical with up to 7 C atoms,
R' represents an alkyl radical with 1 to 4 C atoms,
a and b can have the values 1, 2 and 3 and
a+b is at most 4,

characterized in that Si—H polysiloxanes are reacted with compounds of the general formula

$$R_aSi(OR')_{4-a}$$

wherein

R, R' and a have the abovementioned meaning,

in the presence of redox-stable siloxane polymerisation catalysts which favour the exchange reaction and which are known per se.

2. A process according to claim 1, characterized in that $AlCl_3$ is used as the catalyst.